(19) **Europäisches Patentamt / European Patent Office / Office européen des brevets**

(11) **EP 3 812 852 B1**

(12) **FASCICULE DE BREVET EUROPEEN**

(45) Date de publication et mention de la délivrance du brevet:
**07.06.2023 Bulletin 2023/23**

(21) Numéro de dépôt: **20202383.4**

(22) Date de dépôt: **16.10.2020**

(51) Classification Internationale des Brevets (IPC):
**G05B 15/02** (2006.01)

(52) Classification Coopérative des Brevets (CPC):
**G05B 15/02;** G05B 2219/2614

(54) **PROCEDE ET SYSTEME DE PILOTAGE D'UN SYSTEME THERMIQUE D'UN BATIMENT**

VERFAHREN UND SYSTEM ZUR STEUERUNG EINES WÄRMEANLAGENSYSTEMS EINES GEBÄUDES

METHOD AND SYSTEM FOR CONTROLLING A HEATING SYSTEM OF A BUILDING

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **24.10.2019 FR 1911946**

(43) Date de publication de la demande:
**28.04.2021 Bulletin 2021/17**

(73) Titulaire: **Electricité de France**
**75008 Paris (FR)**

(72) Inventeurs:
- **GASTIGER, Frédéric**
  **77210 AVON (FR)**
- **BERNASCONI, Stéphane**
  **77810 THOMERY (FR)**
- **DUPEYRAT, Patrick**
  **77210 AVON (FR)**
- **MEVELLEC, Eric**
  **92052 Courbevoie (FR)**
- **HEINS, Alexandra**
  **92052 Courbevoie (FR)**
- **DE ROCCA SERRA, Adelaide**
  **92052 Courbevoie (FR)**

(74) Mandataire: **Plasseraud IP**
**66, rue de la Chaussée d'Antin**
**75440 Paris Cedex 09 (FR)**

(56) Documents cités:
US-A1- 2015 253 027    US-A1- 2016 146 497
US-A1- 2018 219 374

**Description**

**Domaine technique**

L'invention concerne le domaine de la domotique. Plus particulièrement, l'invention concerne le domaine du pilotage d'un système thermique d'un bâtiment en fonction notamment d'une consommation énergétique de consigne ou d'une température de consigne.

**Technique antérieure**

Actuellement, un grand nombre de fabricants proposent des systèmes de pilotage du chauffage. La majorité d'entre eux offre à l'usager la possibilité de piloter le chauffage en fonction d'une température à atteindre, et d'une capacité du système à atteindre cette température. Cela est notamment décrit dans le document WO2019/134629.
Pourtant, il peut également être avantageux pour l'utilisateur de piloter son système de chauffage de manière à atteindre une température choisie tout en limitant sa consommation énergétique. De tels systèmes existent. Toutefois, ces systèmes nécessitent de déployer des outils mathématiques complexes, nécessitant de grandes ressources de calcul, de mémoire et de temps. Ceci est problématique, notamment lorsqu'il s'agit de proposer à l'utilisateur une interface compacte, tel qu'un équipement mobile. En effet, un tel équipement ne pourrait être capable d'effectuer les calculs nécessaires au pilotage en temps réel, rendant son utilisation inutile.
Le document US2015/253027 décrit un procédé d'optimisation de réponse à la demande d'un système de chauffage d'un bâtiment, utilisant des données historiques météorologiques pour construire un modèle.

**Résumé**

La présente divulgation vient améliorer la situation.
Il est proposé un procédé, mis en oeuvre par des moyens informatiques, de pilotage d'un système thermique d'un bâtiment, sur une période de temps, comprenant, suite à une définition d'au moins une plage horaire et d'au moins une première température de consigne à atteindre durant ladite plage horaire :

- construction d'une pluralité de programmes, appelés programmes de chauffe, telle que, pour chaque programme de chauffe, une température quelconque, comprise dans un intervalle de températures comprenant la première température de consigne, est associée à la plage horaire, lesdites températures quelconques associées à chaque programme de chauffe étant différentes pour chaque programme de chauffe,
- création d'une table dans laquelle chaque programme de chauffe est associé à une consommation énergétique liée à l'énergie nécessaire pour atteindre la valeur de la température quelconque associée audit programme de chauffe,
- détermination d'un programme de chauffe optimal, tel que ledit programme de chauffe optimal respecte une commande d'utilisateur,
- envoi, en entrée du système thermique, du programme de chauffe optimal à appliquer.

Le procédé permet une optimisation du pilotage du système thermique en calculant en amont, au moyen de la table, un nombre très importants de cas possibles. Les calculs réalisés sont peu gourmands en temps de calcul et en mémoire, ce qui permet de pourvoir fournir un résultat quasi en temps réel. De plus, l'utilisateur a accès à un grand nombre de résultats possible pour le pilotage de son système thermique, ce qui lui permet de trouver le programme le mieux adapté à ses besoins.
Selon un autre aspect, il est proposé un système informatique de pilotage d'un système thermique d'un bâtiment, sur une période de temps comportant un circuit de traitement informatique pour la mise en oeuvre du procédé.
Selon un autre aspect, il est proposé un programme informatique comportant des instructions pour la mise en oeuvre de tout ou partie d'un procédé tel que défini dans les présentes lorsque ce programme est exécuté par un processeur.
Les caractéristiques exposées dans les paragraphes suivants peuvent, optionnellement, être mises en oeuvre. Elles peuvent être mises en oeuvre indépendamment les unes des autres ou en combinaison les unes avec les autres :
La commande d'utilisateur est une deuxième température de consigne à atteindre, différente de la première température de consigne, la détermination du programme de chauffe optimal comprenant l'extraction hors de la table du programme de chauffe correspondant à la deuxième température de consigne.
Cette caractéristique permet un pilotage du système thermique par le confort, en définissant une température de consigne à atteindre dans le local.
La commande d'utilisateur est une consommation énergétique consigne.
Le procédé permet en outre un pilotage du système thermique par le niveau de consommation. Autrement dit, une consommation énergétique de consigne est à respecter à la fin de la période. La température du local est ajustée pour atteindre cette consommation énergétique de consigne.

La détermination du programme de chauffe optimal comprend :

- détermination, au moyen de la table, de la consommation énergétique associée au programme de chauffe correspondant à la première température de consigne, puis
- itérativement, la première température de consigne est modifiée selon un pas prédéfini tel que :

  * à chaque itération la consommation énergétique associée au programme de chauffe correspondant à la première température de consigne modifiée est déterminée et comparée à la consommation énergétique consigne, jusqu'à ce qu'une condition telle que la consommation énergétique associée à la première température de consigne modifiée est inférieure ou égale à la consommation énergétique consigne soit remplie

- puis, le programme de chauffe associé à ladite consommation énergétique remplissant ladite condition est extrait de la table et défini comme programme de chauffe optimal.

Ainsi, le procédé permet de choisir un programme de chauffe optimal parmi une pluralité de programmes de chauffe, tel que le programme de chauffe optimal remplit la commande utilisateur visant à atteindre une consommation énergétique de consigne. Grâce à la recherche itérative du programme de chauffe optimal, un grand nombre de possibilités est testé rapidement, quasi en temps réel. L'utilisateur est donc sûr que le programme de chauffe optimal respecte au mieux la commande utilisateur.

Il est défini :

  * trois plages horaires, correspondant à une période de confort, une période d'absence et une période de nuit,
  * un triplet de températures comprenant une température de consigne de confort, une température de consigne d'absence et une température de consigne de nuit, ces températures étant respectivement associées auxdites périodes, et

- trois températures quelconques, comprises dans un intervalle de températures comprenant les trois températures de consigne de confort, d'absence et de nuit, est associé à chaque programme de chauffe, de sorte que chaque programme de chauffe est unique, qu'une température quelconque est associée à chacune des trois plages horaires, et que la différence entre deux températures quelconques est égale à un pas prédéfini,
- la table comprenant lesdits programmes de chauffe, chaque programme de chauffe étant associé à une consommation énergétique liée à l'énergie nécessaire pour atteindre chacune des trois températures quelconques associées à chacune des trois plages horaires.

La construction des programmes de chauffe est donc particulièrement originale. La définition de trois plages horaire en fonction d'un type de présence est particulièrement avantageuse en ce qu'elle permet de varier la valeur des températures de consigne, et donc d'être plus flexible dans le pilotage du système thermique. Par ailleurs, un plus grand nombre de programmes de chauffe sont ainsi créés, permettant une réelle optimisation du pilotage du système thermique. En effet, lorsque plusieurs programmes de chauffe permettent de respecter la commande utilisateur, l'utilisateur peut choisir parmi ces programmes de chauffe lequel est optimal, notamment en fonction des températures de consigne associées aux plages horaires dans les programmes de chauffe.

La détermination du programme de chauffe optimal comprend :

- détermination, au moyen de la table, de la consommation énergétique associée au programme de chauffe correspondant aux températures de consigne de confort, d'absence et de nuit définies par l'utilisateur, puis
- le procédé comprend

  * une première itération dans laquelle une valeur de la température de consigne de confort est modifiée selon le pas prédéfini, la consommation énergétique associée au programme de chauffe correspondant au triplet de températures modifié est déterminée et comparée à la consommation énergétique consigne, et :

    ¤ si la consommation énergétique associée audit programme de chauffe est inférieure ou égale à la consommation énergétique consigne, ledit programme de chauffe est déterminé comme programme de chauffe optimal ;
    ¤ si la consommation énergétique associée audit programme de chauffe est supérieure à la consommation énergétique consigne :

° une deuxième itération dans laquelle les températures de consigne d'absence et de nuit sont modifiées selon ledit pas prédéfini, la consommation énergétique associée au programme de chauffe correspondant au triplet de températures modifié est déterminée et comparée à la consommation énergétique consigne, et :

¤ si la consommation énergétique associée audit programme de chauffe est inférieure ou égale à la consommation énergétique consigne, ledit programme de chauffe est déterminé comme programme de chauffe optimal,
¤ si la consommation énergétique associée audit programme de chauffe est supérieure à la consommation énergétique consigne, la première itération est de nouveau effectuée.

Ce mode de réalisation permet de conserver un écart constant entre la température de consigne de confort (généralement la température la plus haute du triplet) et les autres températures.

La détermination du programme de chauffe optimal comprend :

- une détermination, au moyen de la table, de la consommation énergétique associée au programme de chauffe correspondant aux températures de consigne de confort, d'absence et de nuit définies par l'utilisateur,
- itérativement :

  * une modification des températures de consigne de confort, d'absence et de nuit selon le pas prédéfini,
  * une détermination, au moyen de la table, de la consommation énergétique associée au programme de chauffe correspondant,
  * une comparaison de ladite consommation énergétique associée audit programme de chauffe correspondant et de ladite consommation énergétique cible, et

    ¤ si la consommation énergétique associée audit programme de chauffe correspondant est égale à la consommation énergétique consigne, ledit programme de chauffe correspondant est déterminé comme programme de chauffe optimal, ou
    ¤ si, entre deux itérations, la consommation énergétique associée audit programme de chauffe correspondant a dépassé la consommation énergétique cible :

      ° les températures de confort, d'absence et de nuit sont modifiées tour à tour, itérativement, selon le pas prédéfini, jusqu'à ce que la consommation énergétique associée au programme de chauffe correspondant soit égale à la consommation énergétique cible, ledit programme de chauffe correspondant étant le programme de chauffe optimal, ou lorsqu'aucune des consommations énergétiques associées aux programmes de chauffe n'est égale à la consommation énergétique cible, sélection du programme de chauffe dont la consommation énergétique associée dépasse la consommation énergétique cible d'une valeur limite, et/ou de préférence sélection du premier programme de chauffe pour lequel la consommation énergétique associée est inférieure à la consommation énergétique cible, le programme de chauffe correspondant étant le programme de chauffe optimal.

Cette variante de réalisation permet de réduire encore le temps de calcul et de recherche pour déterminer le programme de chauffe optimal. En effet, les trois températures de consigne sont modifiées à la même itération selon le même pas prédéfini. Le programme de chauffe optimal est ensuite déterminé en modifiant tour à tour les températures de consigne au voisinage des températures de consigne associées au programme de chauffe dont la consommation énergétique associée a dépassé à la hausse ou à la baisse la consommation énergétique de consigne. Cette variante permet également de conserver un écart quasi constant entre les trois températures.

La détermination du programme de chauffe optimal comprend :

- une détermination, au moyen de la table, de la consommation énergétique associée au programme de chauffe correspondant aux températures de consigne de confort, d'absence et de nuit définies par l'utilisateur,
- puis, itérativement :

  * modification de la température de consigne d'absence selon le pas prédéfini jusqu'à ce que la température de consigne d'absence soit inférieure à la température de consigne de confort selon un premier écart prédéfini, et à chaque itération, détermination de la consommation énergétique associée au programme de chauffe correspondant à la température de consigne d'absence modifiée, et, si la consommation énergétique de consigne n'est pas atteinte :

¤ modification de la température de consigne de nuit selon le pas prédéfini jusqu'à ce que la température de consigne de nuit soit inférieure à la température de consigne de confort selon un deuxième écart prédéfini, et détermination, à chaque itération, de la consommation énergétique associée au programme de chauffe correspondant à la température de consigne de nuit modifiée, et, si la consommation énergétique de consigne n'est pas atteinte :

° modification de la température de consigne confort selon le pas prédéfini et détermination de la consommation énergétique associée au programme de chauffe correspondant, et, si la consommation énergétique de consigne n'est pas atteinte, modification à nouveau de la température de consigne d'absence,

jusqu'à ce que la consommation énergétique associée au programme de chauffe correspondant soit égale à la consommation énergétique de consigne, ou lorsqu'aucune des consommations énergétiques associées aux programmes de chauffe n'est égale à la consommation énergétique cible, sélection du programme de chauffe dont la consommation énergétique associée dépasse la consommation énergétique de consigne d'une valeur limite, et/ou de préférence sélection du premier programme de chauffe pour lequel la consommation énergétique associée inférieure à la consommation énergétique cible, le programme de chauffe correspondant étant le programme de chauffe optimal.

Cette variante de réalisation permet, d'une part, de respecter les préconisations quant aux valeurs de températures optimales dans un local en conservant un écart prédéfini (qui est l'écart préconisé) entre les températures de consigne de confort et de nuit et entre les températures de consigne de confort et d'absence. Puis, une fois que cet écart est créé, les températures de consigne sont modifiées tour à tour de sorte que les écarts sont respectés tout au long de la recherche du programme de chauffe optimal.

la valeur limite est :

- 5% de la consommation énergétique de consigne, ou
- entre 2 et 15kWh, et de préférence 10kWh ;

Cela permet donc d'obtenir un programme de chauffe optimal dont la consommation énergétique associée se rapproche le plus possible de la consommation énergétique cible. En outre, cela permet d'obtenir en sortie de procédé un programme de chauffe optimal, même si aucun des programmes de chauffe n'est associé à une consommation énergétique égale à la consommation énergétique de consigne.

La détermination du programme de chauffe optimal comprend préalablement :

- déterminer si la consommation énergétique de consigne est inférieure à la consommation énergétique minimale comprise dans la table et, si c'est le cas,

* envoyer un message signifiant que la consommation énergétique de consigne est trop faible, et arrêt du procédé, sinon
* déterminer le programme de chauffe optimal.

Ainsi, une condition préalable est mise en oeuvre afin de s'assurer que la commande utilisateur est bien atteignable. Cela permet de renseigner immédiatement l'utilisateur plutôt que de mettre en oeuivre les étapes de détermination du programme de chauffe optimal, qui ne serait pas retourné en sortie puisque la commande utilisateur entrée est trop faible compte tenu des consommations énergétiques associées aux programmes de chauffe dans la table.

La détermination du programme de chauffe optimal comprend en outre :

- déterminer à chaque itération si toutes les températures de consigne de confort, d'absence et de nuit sont inférieures ou supérieures aux bornes de l'intervalle de températures et, lorsque c'est le cas, le programme de chauffe associé aux températures de consigne de l'itération en cours est déterminé comme le programme de chauffe optimal.

Ainsi, cela permet de ne pas retourner un programme de chauffe optimal dont les températures de consigne associées seraient en dehors de l'intervalle de température.

Seule une partie des programmes de chauffe sont construits, les consommations énergétiques associées à ces programmes de chauffe étant calculées au moyen d'une fonction les autres programmes de chauffe et leurs consommations énergétiques associées étant obtenus par interpolation multilinéaire des consommations énergétiques calculées par ladite fonction.

Cela permet un gain de temps considérable dans la construction de la table, seule une partie des calculs des consommations énergétiques associées à chaque programme de chauffe étant effectué.

Le pas prédéfini est compris entre 0,5 et 2 degrés.

Le système comprend en outre un serveur et/ou un dispositif mobile.

## Brève description des dessins

D'autres caractéristiques, détails et avantages apparaîtront à la lecture de la description détaillée ci-après, et à l'analyse des dessins annexés, sur lesquels :

**Fig. 1**

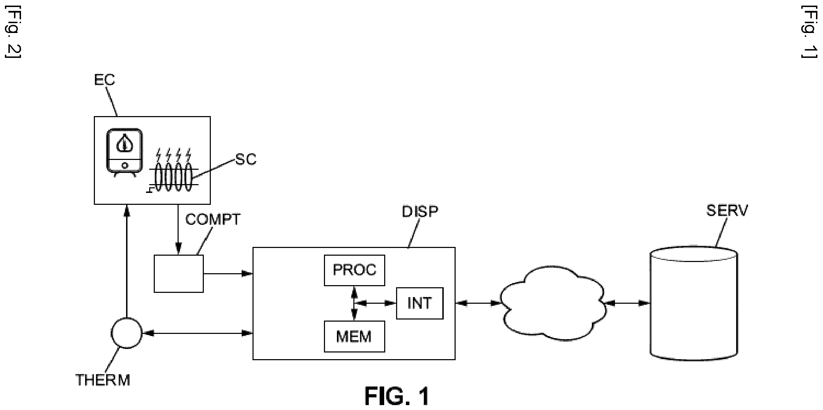

[Fig. 1] représente schématiquement un système de pilotage et de régulation d'un système de chauffage d'un local selon un exemple de réalisation.

**Fig. 2**

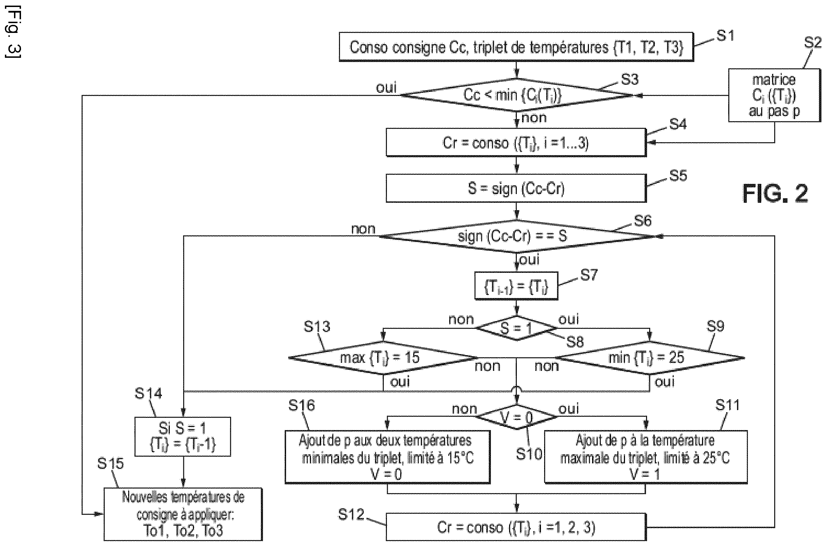

[Fig. 2] est un ordinogramme des étapes du procédé selon un deuxième mode de réalisation.

**Fig. 3**

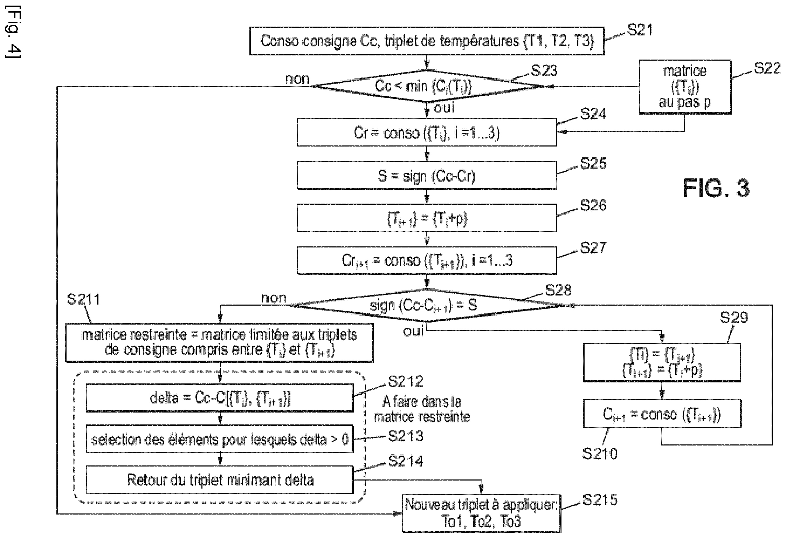

[Fig. 3] est un ordinogramme des étapes du procédé selon un deuxième mode de réalisation.

**Fig. 4**

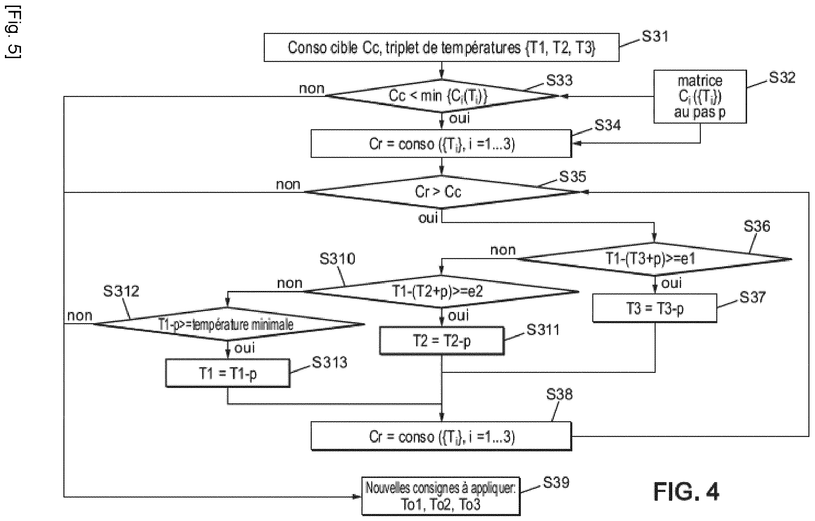

[Fig. 4] est un ordinogramme des étapes du procédé selon un troisième mode de réalisation.

**Fig. 5**

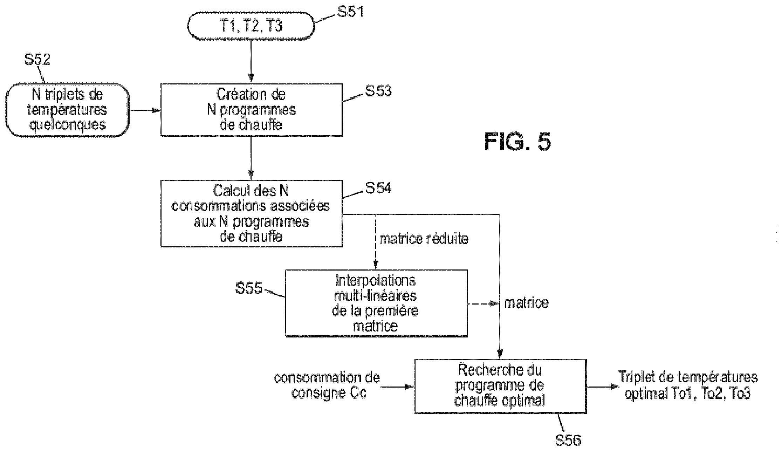

[Fig. 5] est un ordinogramme des principales étapes permettant d'obtenir une matrice selon une variante de réalisation.

## Description des modes de réalisation

La figure 1 représente schématiquement un système SYST de pilotage d'un système de chauffage d'un local, ou système SYST de pilotage ou système SYST selon un exemple de réalisation. Par « local » on entend tout type d'habitation, de bureaux, d'entreprises et plus généralement toute forme de bâtiment comprenant un système de chauffage.

Le système SYST comprend un dispositif DISP de pilotage, ou dispositif DISP, utilisé dans un local. Le dispositif DISP comprend notamment un processeur PROC sur lequel sont chargées des instructions permettant de mettre en oeuvre les étapes du procédé décrites ci-après. Le dispositif DISP comprend en outre une mémoire MEM. Le dispositif DISP peut également comprendre une interface utilisateur INT. L'interface utilisateur peut notamment comprendre un écran, un clavier etc.

Le dispositif DISP comprend une interface utilisateur INT, par tout moyen de connexion tel qu'une connexion sans-fil, internet, etc. L'interface utilisateur peut alors être un ordinateur, une télécommande ou encore un téléphone intelligent ou un boîtier dédié.

L'interface INT permet notamment à l'utilisateur d'entrer une commande utilisateur. Cette commande utilisateur comprend par exemple une température à atteindre dans le local, appelée première température de consigne. L'utilisateur définit également au moins une plage horaire journalière dans laquelle la première température de consigne est à atteindre.

L'utilisateur définit également une consommation énergétique de consigne, comme autre commande utilisateur.

Le local comprend au moins un ensemble de chauffage EC. L'ensemble de chauffage EC comprend tous les dispositifs consommant de l'énergie, qui peuvent être commandés et qui servent à chauffer le local. Notamment, l'ensemble de chauffage EC comprend au moins un système de chauffage SC, par exemple un radiateur, une chaudière à gaz, à fuel ou à bois.

Selon une réalisation particulière, l'ensemble de chauffage EC peut être relié à un dispositif de mesure de la consommation d'énergie, par exemple un compteur COMPT. Le compteur COMPT peut être un compteur intelligent.

L'ensemble de chauffage EC peut également être relié à un thermostat THERM permettant, d'une part, de mesurer la température intérieure du local et, d'autre part, d'activer ou de désactiver l'un des systèmes de chauffage SC de l'ensemble de chauffage EC afin d'atteindre une température de consigne.

Le compteur COMPT peut être connecté au dispositif DISP. Notamment, le compteur COMPT transmet les données de consommation en énergie du local au dispositif DISP. La connexion peut être effectuée par une connexion sans-fil, par radio, par internet ou par une connexion filaire.

Le thermostat THERM peut être connecté au dispositif DISP. Le thermostat THERM transmet les données de température intérieure du local, et éventuellement les états d'activation ou de désactivation des systèmes de chauffage, au dispositif DISP. Le dispositif DISP est apte à communiquer en retour avec le thermostat THERM de manière à piloter les systèmes de chauffage SC. La connexion peut être effectuée par une connexion sans-fil, par radio, par internet ou par une connexion filaire.

Le dispositif DISP peut en outre être relié à un serveur SERV, par exemple par une connexion sans-fil de type connexion internet. Notamment, le serveur SERV peut servir à créer une table comprenant des programmes de chauffe et la consommation énergétique associée à chaque programme de chauffe, tel que décrit ci-après.

Pour chaque programme de chauffe, une température quelconque, comprise dans un intervalle de températures comprenant la première température de consigne, est associée à la plage horaire définie par l'utilisateur. L'intervalle de températures est par exemple de 15°C à 25°C.

Les températures quelconques sont espacées selon un pas prédéfini. Ce pas prédéfini peut être compris entre 0.1 et 2°C.

La consommation énergétique associée à chaque programme de chauffe est alors calculée. Cette consommation énergétique correspond à la consommation énergétique nécessaire pour atteindre la température associée au programme de chauffe.

Selon un exemple de réalisation, la consommation énergétique peut être calculée à partir de la formule :

[Math. 1]

$$C = GV * \left(Pot_{degH} - Seuil\right) + Talon$$

◦ Avec C la consommation d'énergie nécessaire pour atteindre la température de consigne,

◦ GV représente un coefficient de déperditions thermiques du local,

◦ Seuil représente un écart de température entre l'intérieur et l'extérieur en dessous duquel les besoins de chauffage du local sont nuls,

◦ $Pot_{degH}$ représente un écart positif entre la température intérieure estimée du local, et une température extérieure, ladite température intérieure estimée dépendant de la température de consigne, et

◦ Talon représente une consommation d'énergie totale en usages non thermosensibles du local, obtenue à partir de données statistiques.

La température intérieure estimée est estimée comme suit :

[Math. 2]

$$T_{int}(i) = T_{int}(i-1) + \left(K_1 * \acute{E}tat_{chauffage} - K_2 * (T_{int}(i-1) - T_{ext}(i-1))\right)\Delta t$$

où :

- $T_{int}$ est la température intérieure estimée à l'itération i,
- $K_1$, $K_2$ sont des paramètres thermiques du local, représentant respectivement une remontée en température et une chute en température du local, $K_1$, $K_2$ étant obtenus à partir de données historiques du local,
- $Etat_{chauffage}$ est un booléen représentant un état d'activation ou de désactivation du système de chauffage, $Etat_{chauffage}$ est égal à 1 lorsque la température intérieure est en-dessous de la température de consigne, et $Etat_{chauffage}$ est égal à 0 lorsque la température intérieure est au-dessus de la température de consigne,
- $T_{ext}$ représente la température extérieure du bâtiment obtenue à partir de données météorologiques prévisionnelles ;

avec une première itération où une valeur de la température initiale est par exemple la dernière température intérieure connue du local.

Enfin, l'écart positif entre la température intérieure estimée du local et la température extérieure sur toute la période de temps $Pot_{degH}$ est calculé comme suit :

7

[Math. 3]

$$Pot_{degH} = \Delta t \sum_{i=i0}^{I} max\,[0,(T_{int}(i) - T_{ext}(i))]$$

où :

- $Pot_{degH}$ représente l'écart positif entre la température intérieure estimée du local et la température extérieure sur toute la période de temps;
- $T_{int}(i)$ et $T_{ext}(i)$ représentent respectivement ladite température intérieure estimée et ladite température extérieure à chaque pas de temps.

Selon un autre exemple de réalisation, la consommation énergétique peut être calculée en faisant la moyenne des températures de consigne à chaque pas de temps sur la période étudiée.

Selon un autre exemple de réalisation, la consommation énergétique peut être calculée au moyen d'une fonction d'apprentissage basé sur des données historiques du local, notamment les consommations réelles obtenues par exemple au moyen d'un compteur COMPT, des températures de consigne et des températures extérieurs.

La fonction d'apprentissage peut notamment être mise en oeuvre au moyen d'un réseau de neurones.

Ces programmes de chauffe, associés à leur consommation énergétique respective, sont stockés dans la table..

Le système SYST permet, à partir de cette table, de déterminer quel programme de chauffe, parmi tous les programmes de chauffe, est optimal, compte tenu de la commande utilisateur.

Si l'utilisateur choisit de piloter son système de chauffage en fonction d'une température de consigne, le programme de chauffe correspondant à cette température est extrait de la table afin d'être appliqué. L'utilisateur est alors informé de la consommation énergétique associée à cette température.

La table de programmes de chauffe peut être envoyée à l'interface utilisateur INT qui la stocke. Le programme de chauffe optimal est alors déterminé en local, sur l'interface utilisateur.

Dans une variante de réalisation, décrite ci-après en référence à la figure 5, une table réduite est envoyée à l'interface utilisateur INT qui se charge alors de calculer la table complète. Cette table réduite comprend seulement une partie des programmes de chauffe associés à leur consommation énergétique.

Dans un mode de réalisation particulier, la commande utilisateur est une consommation énergétique de consigne. A partir de la table, le système va identifier le programme de chauffe optimal, respectant cette consommation énergétique de consigne.

Pour identifier ce programme de chauffe optimal, il faut identifier la température associé au programme de chauffe dont la consommation énergétique qui lui est associée respecte la consommation énergétique de consigne.

Dans un mode de réalisation préféré, l'utilisateur ne définit pas une plage horaire mais trois plages horaires sur une journée. Ces plages horaires correspondent à une période de présence, appelée période de confort, d'absence et de nuit. Un triplet de températures T1, T2, T3 à atteindre est également défini par l'utilisateur, chaque température étant associée à une plage horaire. Un programme de chauffe est alors créé pour chaque triplet de températures.

Les trois températures T1, T2 et T3 sont comprises dans l'intervalle de températures, par exemple entre 15°C et 25°C.

Chaque triplet de températures est différent pour chaque programme de chauffe. Par exemple, si au moins une des températures T1, T2, T3 est modifiée selon le pas prédéfini de 2°C entre chaque programme de chauffe, 216 programmes de chauffe sont obtenus. Si le pas prédéfini est de 0.5°C, 9261 programmes de chauffe sont obtenus.

Cela permet donc d'offrir à l'utilisateur un large choix de possibilités, et une plus grande flexibilité dans le pilotage de son système de chauffage.

Une fois les programmes de chauffe définis, la consommation énergétique associée à ce programme de chauffe est calculée. Puis, les programmes de chauffe et leur consommation énergétique sont stockés dans la table.

Ainsi, lorsque l'utilisateur souhaite piloter son système en fonction d'une consommation énergétique de consigne, il faut identifier le programme de chauffe dont le triplet de températures respecte la commande utilisateur. L'invention permet, d'une part, de tenir compte de cette commande utilisateur, d'autre part de modifier le moins possible le triplet de températures de consigne de confort, d'absence et de nuit T1, T2, T3 (ou triplet de températures de consigne ou températures de consigne T1, T2, T3 dans la suite de la description) défini par l'utilisateur et enfin, de préserver au maximum la température associée à la plage horaire de confort.

L'identification du programme de chauffe optimal peut être réalisée selon plusieurs variantes de réalisation décrites ci-après en référence aux figures 2 à 4.

Ces variantes de réalisation sont décrites dans le cas où trois plages horaires et un triplet de températures T1, T2, T3 sont définis par l'utilisateur. Ces variantes de réalisation ne sont pas limitées à cet exemple, et peuvent être appliquée de la même manière dans le cas où plus de trois ou moins de trois plages horaires et températures sont définies.

La figure 2 illustre les principales étapes d'une première variante de réalisation permettant d'identifier le programme de chauffe optimal lorsque la commande utilisateur est une consommation énergétique de consigne.

Dans cette première variante de réalisation, les valeurs des températures de consigne T1, T2, T3 sont modifiées progressivement jusqu'à trouver le programme de chauffe optimal associé aux températures modifiées.

Notamment, les températures sont incrémentées ou décrémentées (selon que la consommation énergétique de consigne est plus élevée ou plus basse que la consommation énergétique en cours) alternativement selon le pas prédéfini. La plus haute température est modifiée de ce pas, puis les deux autres températures le sont également.

Cette première variante permet de conserver un écart constant entre la plus haute température du triplet et les deux autres. La plus haute température du triplet est généralement associée à la plage horaire de confort.

De manière plus précise, à l'étape S1 l'utilisateur définit la consommation de consigne Ce et le triple de températures de consigne T1, T2, T2 à atteindre respectivement dans chacune des plages horaires.

La table est créée à l'étape S2, avec le pas prédéfini p comme plus petit écart existant entre deux températures de consigne.

A l'étape S3, la valeur de la consommation énergétique de consigne Ce est comparée à la plus petite valeur de la consommation énergétique de la table.

Si la consommation énergétique de consigne Ce est plus petite que la plus petite valeur de la consommation énergétique de la table, le procédé est stoppé et un message est envoyé à l'utilisateur pour l'informer que la consommation énergétique de consigne Ce choisie est trop faible par rapport aux possibilités de pilotage du système.

Sinon, la valeur de la consommation énergétique courante Cr associée au triplet de températures de consigne T1, T2, T3 dans la table est obtenue (étape S4).

La consommation énergétique courante Cr est la consommation énergétique associée au programme de chauffe correspondant à la valeur des températures de consigne T1, T2, T3 à chaque itération du procédé.

Une variable s est introduite à l'étape S5. Cette variable renvoie le signe de la différence entre la consommation énergétique de consigne Ce et la consommation énergétique courante Cr. Plus précisément, si la consommation énergétique de consigne Ce est plus grande que la consommation énergétique courante Cr, s est égal à 1, sinon s est égal à -1.

A l'étape S7, le triplet de températures de consigne est défini.

A l'étape S8, il est déterminé si la variable s est égale à 1, c'est-à-dire si la consommation énergétique de consigne Ce est toujours plus élevée que la consommation énergétique courante Cr.

Si c'est le cas, il est déterminé à l'étape S9 si la température de consigne la plus faible du triplet de températures est égale à 25°C. Lorsque c'est le cas et que la variable s est égale à 1, alors le programme de chauffe correspondant au triplet de températures de l'itération est renvoyé à l'utilisateur comme programme de chauffe optimal (étapes S9, S14, S15). Le triplet optimal To1, To2, To3 est alors {25°C, 25°C, 25°C}.

Lorsqu'à l'étape S9 la température de consigne la plus faible n'est pas égale à 25°C, il est déterminé si une variable binaire v est égale à zéro. Si c'est le cas, un pas prédéfini p est ajouté à la température la plus haute du triplet. La variable binaire v est forcée à 1.

Puis, la consommation énergétique courante associée au triplet de températures de l'itération est calculée et l'étape S6 est à nouveau mise en oeuvre (étapes S10, S11, S12).

A l'étape S8, si la variable s n'est pas égale à 1, c'est-à-dire si la variable s est égale à -1, il est déterminé si la température de consigne maximale du triplet est égale à 15°C. Lorsque c'est le cas et que la variable s est égale à 1, alors le programme de chauffe correspondant au triplet de températures de l'itération est renvoyé à l'utilisateur comme programme de chauffe optimal (étapes S13, S14, S15). Le triplet optimal To1, To2, To3 est alors {15°C, 15°C, 15°C}.

Lorsqu'à l'étape S13 la température de consigne la plus haute n'est pas égale à 15°C, il est déterminé si la variable binaire v est égale à zéro. Si ce n'est pas le cas, un pas prédéfini p est ajouté aux deux températures de consigne les plus faibles du triplet. La variable binaire v est forcée à 0.

Puis, la consommation énergétique courante associée au triplet de températures de l'itération est calculée et l'étape S6 est à nouveau mise en oeuvre (étapes S10, S16, S12).

La figure 2 a été décrite dans le cas où la consommation énergétique de consigne Ce est supérieure à la consommation énergétique initiale (c'est-à-dire la consommation énergétique associé au premier triplet de températures de consigne défini par l'utilisateur), les températures de consignes T1, T2, T3 étant modifiées par ajout du pas prédéfini p.

Les étapes du procédé s'appliquent de la même manière lorsque la consommation énergétique de consigne Ce est inférieure à la consommation énergétique initiale, suivant quelques modifications.

Plus précisément, lorsque la consommation énergétique de consigne Ce est plus grande que la consommation énergétique courante Cr, s est égal à 1, sinon s est égal à -1. Dans ce deuxième cas, les températures de consigne sont modifiées par retrait du pas prédéfini p.

La figure 3 illustre les principales étapes d'une deuxième variante de réalisation permettant d'identifier le programme de chauffe optimal lorsque la commande utilisateur est une consommation énergétique de consigne.

Cette deuxième variante de réalisation permet de réduire le temps de calcul et de détermination du programme de chauffe optimal par rapport à la première variante de réalisation.

Dans cette variante, les étapes S21 à S25 sont identiques aux étapes S1 à S5 décrites en référence à la figure 2.

A l'étape S26, les températures de consignes T1, T2, T3 sont modifiées par ajout du pas prédéfini p.

A l'étape S27, la consommation énergétique courante $Cr_{i+1}$ associée au triplet de températures $\{T_{i+1}\}$ modifié est déterminée.

Si le signe de la différence entre la consommation énergétique de consigne Ce et la consommation énergétique courante $Cr_{i+1}$ est le même que celui de la variable s (étape S28), à l'étape S29 le triplet de températures est à nouveau modifié tel que décrit en référence à l'étape S26. La consommation énergétique courante Cr est alors de nouveau déterminée pour le triplet de températures modifié à l'étape S210 et l'étape S28 est de nouveau mise en oeuvre.

Lorsque le signe de la différence entre la consommation énergétique de consigne Ce et la consommation énergétique courante $Cr_{i+1}$ est différent de celui de la variable s (étape 28), une table restreinte est extraite de la table. Cette table restreinte comprend les programmes de chauffe et leur consommation énergétique associée, tels qu'au moins une des trois températures associées aux programmes de chauffe de la table restreinte diffère seulement du triplet de températures de consigne modifié du pas prédéfini p (étape S211).

Aux étapes S21 à S214, une pluralité de variables delta est calculée. Cette variable correspond à la différence entre la consommation énergétique de consigne Ce et la consommation énergétique associée à chacun des programmes de chauffe de la table restreinte. Les programmes de chauffe pour lesquels delta est supérieur à zéro sont retenus. Puis, le programme de chauffe pour lequel le delta est minimal est déterminé comme programme de chauffe optimal.

A l'étape S215, le triplet de températures To1, To2, To3 du programme de chauffe optimal est retourné à l'utilisateur pour pilotage du système de chauffage avec ces températures.

La figure 4 illustre les principales étapes d'une troisième variante de réalisation permettant d'identifier le programme de chauffe optimal lorsque la commande utilisateur est une consommation énergétique de consigne.

Cette troisième réalisation permet de respecter des températures de confort, d'absence et de nuit préconisée en imposant un écart entre ces températures. Notamment, un premier écart e1 est défini, séparant la température de consigne de confort de la température de consigne d'absence. Ce premier écart e1 est par exemple égal à 4°C.

Un deuxième écart e2 est défini, séparant la température de consigne de confort de la température de consigne de nuit. Ce deuxième écart e2 est par exemple égal à 3°C.

Dans ce mode de réalisation, la température de consigne T1 est la température de consigne de confort, la température de consigne T2 est la température de consigne de nuit et la température de consigne T3 est la température de consigne d'absence.

La température de consigne confort reste ainsi toujours supérieure aux températures d'absence et de nuit.

Dans cette variante, les étapes S31 à S34 sont identiques aux étapes S1 à S4 décrites en référence à la figure 2.

A l'étape S35, la consommation énergétique courante Cr est comparée à la consommation énergétique de consigne Cc. Si la consommation énergétique courante Cr est plus grande que la consommation énergétique de consigne Cc, il est déterminé si la différence entre la température de consigne d'absence T3 et la température de consigne de confort T1 est supérieure ou égale au premier écart e1 (étape S36).

Si ce n'est pas le cas, la température de consigne d'absence T3 est diminuée à chaque itération selon le pas prédéfini p, jusqu'à ce que la différence entre la température de consigne de confort T1 et la température de consigne d'absence T3 soit égale au premier écart e1. A chaque itération, la consommation énergétique associé au programme de chauffe correspondant à ces nouvelles températures est déterminée. Si cette consommation énergétique correspond à la consommation énergétique cible Cc, le programme de chauffe correspondant est déterminé comme programme de chauffe optimal, et les températures de ce programme de chauffe deviennent les températures de consigne optimales To1, To2, To3 à appliquer au système (étapes S37 à S39). Sinon, l'étape S36 est à nouveau mises en oeuvre.

Si, suite à l'étape S36, il est déterminé que la température de consigne de confort T1 et la température de consigne d'absence T3 sont séparées par le premier écart e1, alors il est déterminé si la différence entre la température de consigne de nuit T2 et la température de consigne de confort T1 est supérieure ou égale au deuxième écart e2 (étape S310).

Si ce n'est pas le cas, la température de consigne de nuit T2 est diminuée à chaque itération selon le pas prédéfini p, jusqu'à atteindre ce deuxième écart e2. A chaque itération, la consommation énergétique associé au programme de chauffe correspondant à ces nouvelles températures est déterminée. SI cette consommation énergétique correspond à la consommation énergétique cible Cc, le programme de chauffe correspondant est déterminé comme programme de chauffe optimal, et les températures de ce programme de chauffe deviennent les températures de consigne optimales To1, To2, To3 à appliquer au système (étapes S311, S38, S39). Sinon, l'étape S36 est à nouveau mises en oeuvre.

Si, suite à l'étape S310, il est déterminé que la température de consigne de confort T1 et la température de consigne de nuit T2 sont séparées par le deuxième écart e2, alors il est déterminé si la température de consigne de confort T1 est supérieure strictement à la borne inférieure de l'intervalle, soit 15°C.

Si c'est le cas, la température de consigne de confort T1 est diminuée selon le pas prédéfini p. la consommation énergétique associée au programme de chauffe correspondant à ces nouvelles températures est déterminée. Si cette consommation énergétique correspond à la consommation énergétique cible Cc, le programme de chauffe correspondant est déterminé comme programme de chauffe optimal, et les températures de ce programme de chauffe deviennent les températures de consigne optimales To1, To2, To3 à appliquer au système (étapes S313, S38, S39). Sinon, l'étape S36 est à nouveau mises en oeuvre.

Dans cette variante, le programme de chauffe optimal peut également être déterminé lorsque, pour un triplet de températures, la consommation énergétique associée à ce programme de chauffe est proche de la consommation énergétique de consigne Cc. Ainsi, un programme de chauffe peut être identifié comme optimal même si la consommation énergétique qui lui est associé n'est pas égale à la consommation énergétique cible Cc.

Par exemple, dès que la consommation énergétique courante Cr associée à un programme de chauffe est inférieure à la consommation énergétique cible Cc, le triplet correspondant à cette itération est retourné comme triplet optimal To1, To2, To3.

Un autre exemple est de retourner le triplet de températures associé à une consommation énergétique courante Cr comme triplet de températures optimal To1, To2, To3 si la consommation énergétique courante Cr associée à ce triplet dépasse la consommation énergétique cible Ce d'une valeur limite prédéfinie. Par exemple, la valeur limite est 5% de la consommation énergétique cible.

Dans un autre exemple, la valeur limite prédéfinie est 10kWh.

La figure 5 illustre les principales étapes d'une variante de réalisation permettant de calculer la table de programmes de chauffe et de leurs consommations énergétiques associées.

Cette variante de réalisation est avantageusement utilisée lorsque le pas prédéfini est faible, par exemple 0.5°C. En effet, avec un tel pas de temps, 9261 consommations énergétiques sont à calculer, ce qui est coûteux en temps.

Dans cette variante, la table n'est pas calculée entièrement comme décrit précédemment. Le pas prédéfini est augmenté à une valeur permettant de limiter le nombre de calculs de consommations énergétiques, par exemple 2°C. Les programmes de chauffe correspondant sont créés, puis les consommations énergétiques qui leur sont associées sont calculées. Avec un pas de 2°C, seuls 216 calculs sont à réaliser.

Les consommations énergétiques sont calculées au moyen de la fonction

[Math. 1]

$$C = GV * \left( Pot_{degH} - Seuil \right) + Talon$$

décrite ci-avant.

Pour toutes les consommations énergétiques manquantes, une interpolation linéaire est réalisée à partir des consommations énergétiques calculées. Plus précisément, une interpolation multilinéaire est réalisée, par exemple une interpolation trilinéaire.

Ainsi, aux étapes S51, S52, S53, les programmes de chauffe sont créés pour tous les triplets de température T1, T2, T3 espacés du pas prédéfini, le pas prédéfini étant de préférence important, par exemple 2°C.

A l'étape S54 les consommations énergétiques associées à ces programme de chauffe sont calculées afin d'obtenir une table réduite.

A l'étape S55, l'interpolation multilinéaire est appliquée à cette table réduite pour obtenir la table complète, dans laquelle les programmes de chauffe sont créés pour tous les triplets de température T1, T2, T3 espacés d'un pas plus faible, par exemple 0.5°C, les consommations énergétiques associées à ces programmes de chauffe étant également ment déterminées. A l'étape S56, le programme de chauffe optimal est déterminé selon l'une des variantes de réalisation décrites en référence aux figures 2 à 4.

## Revendications

1. Procédé, mis en oeuvre par des moyens informatiques, de pilotage d'un système thermique d'un bâtiment, sur une période de temps, comprenant, suite à une définition d'au moins une plage horaire et d'au moins une première température de consigne à atteindre durant ladite plage horaire :

   - construction d'une pluralité de programmes, appelés programmes de chauffe, telle que, pour chaque programme de chauffe, une température quelconque, comprise dans un intervalle de températures comprenant la première température de consigne, est associée à la plage horaire, lesdites températures quelconques associées à chaque programme de chauffe étant différentes pour chaque programme de chauffe,

- création d'une table dans laquelle chaque programme de chauffe est associé à une consommation énergétique liée à l'énergie nécessaire pour atteindre la valeur de la température quelconque associée audit programme de chauffe,
- détermination d'un programme de chauffe optimal, tel que ledit programme de chauffe optimal respecte une commande d'utilisateur,
- envoi, en entrée du système thermique, du programme de chauffe optimal à appliquer

**caractérisé en ce que** :

- il est défini :

   * trois plages horaires, correspondant à une période de confort, une période d'absence et une période de nuit,
   * un triplet de températures (T1, T2 et T3) comprenant une température de consigne de confort (T1), une température de consigne d'absence (T3) et une température de consigne de nuit (T2), ces températures étant respectivement associées auxdites périodes, et

- trois températures quelconques, comprises dans un intervalle de températures comprenant les trois températures de consigne de confort, d'absence et de nuit, le triplet de températures (T1, T2 et T3) est associé à chaque programme de chauffe, de sorte que chaque programme de chauffe est unique, qu'une température quelconque est associée à chacune des trois plages horaires, et que la différence entre deux températures quelconques est égale à un pas prédéfini,
- la table comprenant lesdits programmes de chauffe, chaque programme de chauffe étant associé à une consommation énergétique liée à l'énergie nécessaire pour atteindre chacune des trois températures quelconques associées à chacune des trois plages horaires.

2. Procédé selon la revendication 1, dans lequel la commande d'utilisateur est une deuxième température de consigne à atteindre, différente de la première température de consigne, la détermination du programme de chauffe optimal comprenant l'extraction hors de la table du programme de chauffe correspondant à la deuxième température de consigne.

3. Procédé selon l'une des revendications 1 ou 2, dans lequel la commande d'utilisateur est une consommation énergétique consigne.

4. Procédé selon la revendication 3, dans lequel la détermination du programme de chauffe optimal comprend :

   - détermination, au moyen de la table, de la consommation énergétique associée au programme de chauffe correspondant à la première température de consigne, puis
   - itérativement, la première température de consigne est modifiée selon un pas prédéfini tel que :

      * à chaque itération la consommation énergétique associée au programme de chauffe correspondant à la première température de consigne modifiée est déterminée et comparée à la consommation énergétique consigne, jusqu'à ce qu'une condition telle que la consommation énergétique associée à la première température de consigne modifiée est inférieure ou égale à la consommation énergétique consigne soit remplie

   - puis, le programme de chauffe associé à ladite consommation énergétique remplissant ladite condition est extrait de la table et défini comme programme de chauffe optimal.

5. Procédé selon l'une des revendications 1 à 4, dans lequel la détermination du programme de chauffe optimal comprend :

   - détermination, au moyen de la table, de la consommation énergétique associée au programme de chauffe correspondant aux températures de consigne de confort, d'absence et de nuit définies par l'utilisateur, puis
   - le procédé comprend
   * une première itération dans laquelle une valeur de la température de consigne de confort (T1) est modifiée selon le pas prédéfini, la consommation énergétique associée au programme de chauffe correspondant au triplet de températures (T1, T2 et T3) modifié est déterminée et comparée à la consommation énergétique consigne, et :

¤ si la consommation énergétique associée audit programme de chauffe est inférieure ou égale à la consommation énergétique consigne, ledit programme de chauffe est déterminé comme programme de chauffe optimal ;
¤ si la consommation énergétique associée audit programme de chauffe est supérieure à la consommation énergétique consigne :

° une deuxième itération dans laquelle les températures de consigne d'absence et de nuit sont modifiées selon ledit pas prédéfini, la consommation énergétique associée au programme de chauffe correspondant au triplet de températures (T1, T2 et T3) modifié est déterminée et comparée à la consommation énergétique consigne, et :

¤ si la consommation énergétique associée audit programme de chauffe est inférieure ou égale à la consommation énergétique consigne, ledit programme de chauffe est déterminé comme programme de chauffe optimal,
¤ si la consommation énergétique associée audit programme de chauffe est supérieure à la consommation énergétique consigne, la première itération est de nouveau effectuée.

6. Procédé selon l'une des revendications 1 à 4, dans lequel la détermination du programme de chauffe optimal comprend :

- une détermination, au moyen de la table, de la consommation énergétique associée au programme de chauffe correspondant aux températures de consigne de confort, d'absence et de nuit définies par l'utilisateur,
- itérativement :

* une modification des températures de consigne de confort, d'absence et de nuit selon le pas prédéfini,
* une détermination, au moyen de la table, de la consommation énergétique associée au programme de chauffe correspondant,
* une comparaison de ladite consommation énergétique associée audit programme de chauffe correspondant et de ladite consommation énergétique cible, et

¤ si la consommation énergétique associée audit programme de chauffe correspondant est égale à la consommation énergétique consigne, ledit programme de chauffe correspondant est déterminé comme programme de chauffe optimal, ou
¤ si, entre deux itérations, la consommation énergétique associée audit programme de chauffe correspondant a dépassé la consommation énergétique cible :

° les températures de confort, d'absence et de nuit sont modifiées tour à tour, itérativement, selon le pas prédéfini, jusqu'à ce que la consommation énergétique associée au programme de chauffe correspondant soit égale à la consommation énergétique cible, ledit programme de chauffe correspondant étant le programme de chauffe optimal, ou lorsqu'aucune des consommations énergétiques associées aux programmes de chauffe n'est égale à la consommation énergétique cible, sélection du programme de chauffe dont la consommation énergétique associée dépasse la consommation énergétique cible d'une valeur limite, et/ou de préférence sélection du premier programme de chauffe pour lequel la consommation énergétique associée est inférieure à la consommation énergétique cible, le programme de chauffe correspondant étant le programme de chauffe optimal.

7. Procédé selon l'une des revendications 1 à 4, dans lequel la détermination du programme de chauffe optimal comprend :

- une détermination, au moyen de la table, de la consommation énergétique associée au programme de chauffe correspondant aux températures de consigne de confort, d'absence et de nuit définies par l'utilisateur,
- puis, itérativement :

* modification de la température de consigne d'absence (T3) selon le pas prédéfini jusqu'à ce que la température de consigne d'absence (T3) soit inférieure à la température de consigne de confort (T1) selon un premier écart prédéfini, et à chaque itération, détermination de la consommation énergétique associée au programme de chauffe correspondant à la température de consigne d'absence (T3) modifiée, et, si la consommation énergétique de consigne (Cc) n'est pas atteinte :

¤ modification de la température de consigne de nuit (T2) selon le pas prédéfini jusqu'à ce que la température de consigne de nuit (T2) soit inférieure à la température de consigne de confort (T1) selon un deuxième écart prédéfini, et détermination, à chaque itération, de la consommation énergétique associée au programme de chauffe correspondant à la température de consigne de nuit (T2) modifiée, et, si la consommation énergétique de consigne (Cc) n'est pas atteinte :

° modification de la température de consigne confort selon le pas prédéfini et détermination de la consommation énergétique associée au programme de chauffe correspondant, et, si la consommation énergétique de consigne (Cc) n'est pas atteinte, modification à nouveau de la température de consigne d'absence (T3),

jusqu'à ce que la consommation énergétique associée au programme de chauffe correspondant soit égale à la consommation énergétique de consigne (Cc), ou lorsqu'aucune des consommations énergétiques associées aux programmes de chauffe n'est égale à la consommation énergétique cible, sélection du programme de chauffe dont la consommation énergétique associée dépasse la consommation énergétique de consigne (Cc) d'une valeur limite, et/ou de préférence sélection du premier programme de chauffe pour lequel la consommation énergétique associée est inférieure à la consommation énergétique cible, le programme de chauffe correspondant étant le programme de chauffe optimal.

**8.** Procédé selon l'une des revendications 6 ou 7, dans lequel la valeur limite est :

- 5% de la consommation énergétique de consigne (Cc), ou
- entre 2 et 15kWh, et de préférence 10kWh.

**9.** Procédé selon l'une des revendications 4 à 7, dans lequel la détermination du programme de chauffe optimal comprend préalablement :

- déterminer si la consommation énergétique de consigne (Cc) est inférieure à la consommation énergétique minimale comprise dans la table et, si c'est le cas,

* envoyer un message signifiant que la consommation énergétique de consigne (Cc) est trop faible, et arrêt du procédé, sinon
* déterminer le programme de chauffe optimal.

**10.** Procédé selon l'une des revendications 4 à 8, dans lequel la détermination du programme de chauffe optimal comprend en outre :

- déterminer à chaque itération si toutes les températures de consigne de confort, d'absence et de nuit sont inférieures ou supérieures aux bornes de l'intervalle de températures et, lorsque c'est le cas, le programme de chauffe associé aux températures de consigne de l'itération en cours est déterminé comme le programme de chauffe optimal.

**11.** Procédé selon l'une des revendications 1 à 10, dans lequel seule une partie des programmes de chauffe sont construits, les consommations énergétiques associées à ces programmes de chauffe étant calculées au moyen d'une fonction
les autres programmes de chauffe et leurs consommations énergétiques associées étant obtenus par interpolation multilinéaire des consommations énergétiques calculées par ladite fonction.

**12.** Procédé selon l'une des revendications précédentes, dans lequel le pas prédéfini est compris entre 0,5 et 2 degrés.

**13.** Système informatique de pilotage d'un système thermique d'un bâtiment, sur une période de temps comportant un circuit de traitement informatique pour la mise en oeuvre du procédé selon l'une des revendications 1 à 123.

**14.** Système informatique selon la revendication 13 comprenant en outre un serveur et/ ou un dispositif mobile.

**15.** Programme informatique comportant des instructions pour la mise en oeuvre du procédé selon l'une des revendi-

EP 3 812 852 B1

cations 1 à 12 lorsque ce programme est exécuté par un processeur.

**Patentansprüche**

1. Verfahren zur Steuerung eines thermischen Systems eines Gebäudes über einen Zeitraum, das durch Computermittel umgesetzt wird, und das nach einer Definition mindestens eines Zeitbereichs und mindestens einer ersten Solltemperatur, die während dieses Zeitbereichs erreicht werden soll, Folgendes umfasst:

   - Erstellung einer Vielzahl von Programmen, als Heizprogramme bezeichnet, derart, dass für jedes Heizprogramm eine beliebige Temperatur, die in einem Temperaturintervall liegt, welches die erste Solltemperatur umfasst, dem Zeitbereich zugeordnet ist, wobei die beliebigen, jedem Heizprogramm zugeordneten Temperaturen für jedes Heizprogramm unterschiedlich sind,
   - Erstellung einer Tabelle, in der jedes Heizprogramm einem Energieverbrauch zugeordnet ist, der sich auf die Energie bezieht, die erforderlich ist, um den Wert der beliebigen, dem Heizprogramm zugeordneten Temperatur zu erreichen,
   - Bestimmung eines optimalen Heizprogramms derart, dass das optimale Heizprogramm einen Benutzerbefehl erfüllt,
   - Senden des anzuwendenden optimalen Heizprogramms zum Eingang des thermischen Systems,
   **dadurch gekennzeichnet, dass:**
   - definiert wird:

     * drei Zeitbereiche, die einem Komfortzeitraum, einem Abwesenheitszeitraum und einem Nachtzeitraum entsprechen,
     * ein Temperaturtripel (T1, T2 und T3), das eine Komfort-Solltemperatur (T1), eine Abwesenheits-Solltemperatur (T3) und eine Nacht-Solltemperatur (T2) umfasst, wobei diese Temperaturen jeweils den genannten Zeiträumen zugeordnet sind, und

   - drei beliebige Temperaturen, die in einem Temperaturintervall liegen, das die drei Komfort-, Abwesenheits- und Nacht-Solltemperaturen umfasst, wobei das Temperaturtripel (T1, T2 und T3) jedem Heizprogramm zugeordnet ist, so dass jedes Heizprogramm einzigartig ist, dass jedem der drei Zeitbereiche eine beliebige Temperatur zugeordnet ist und dass die Differenz zwischen zwei beliebigen Temperaturen gleich einem vordefinierten Schritt ist,
   - wobei die Tabelle die Heizprogramme umfasst, wobei jedes Heizprogramm einem Energieverbrauch zugeordnet ist, der sich auf die Energie bezieht, die erforderlich ist, um jede der drei beliebigen Temperaturen zu erreichen, die jedem der drei Zeitbereiche zugeordnet sind.

2. Verfahren nach Anspruch 1, wobei der Benutzerbefehl eine zweite zu erreichende Solltemperatur ist, die sich von der ersten Solltemperatur unterscheidet, wobei die Bestimmung des optimalen Heizprogramms das Herausnehmen des der zweiten Solltemperatur entsprechenden Heizprogramms aus der Tabelle umfasst.

3. Verfahren nach einem der Ansprüche 1 oder 2, wobei der Benutzerbefehl ein Soll-Energieverbrauch ist.

4. Verfahren nach Anspruch 3, wobei die Bestimmung des optimalen Heizprogramms umfasst:

   - Bestimmen des Energieverbrauchs, der dem Heizprogramm zugeordnet ist, welches der ersten Solltemperatur entspricht, anhand der Tabelle, und dann
   - iterativ Änderung der ersten Solltemperatur in einem vordefinierten Schritt, so dass:

     * bei jeder Iteration der Energieverbrauch, der dem Heizprogramm zugeordnet ist, welches der ersten geänderten Solltemperatur entspricht, bestimmt und mit dem Soll-Energieverbrauch verglichen wird, bis eine Bedingung erfüllt ist, so dass der Energieverbrauch, der der ersten geänderten Solltemperatur zugeordnet ist, kleiner oder gleich dem Soll-Energieverbrauch ist,

   - dann das Heizprogramm, das dem Energieverbrauch zugeordnet ist, der die Bedingung erfüllt, aus der Tabelle extrahiert und als optimales Heizprogramm festgelegt wird.

5. Verfahren nach einem der Ansprüche 1 bis 4, wobei die Bestimmung des optimalen Heizprogramms umfasst:

- Bestimmung des Energieverbrauchs, der dem Heizprogramm zugeordnet ist, das den benutzerdefinierten Komfortabwesenheits- und Nacht-Solltemperaturen entspricht, anhand der Tabelle, und dann
- umfasst das Verfahren

* eine erste Iteration, bei der ein Wert der Komfort-Solltemperatur (T1) gemäß dem vordefinierten Schritt geändert wird, der dem Heizprogramm zugeordnete Energieverbrauch, der dem geänderten Temperaturtripel (T1, T2 und T3) entspricht, ermittelt und mit dem Soll-Energieverbrauch verglichen wird, und:

■ wenn der dem genannten Heizprogramm zugeordnete Energieverbrauch kleiner oder gleich dem Soll-Energieverbrauch ist, wird das genannte Heizprogramm als optimales Heizprogramm bestimmt;
■ wenn der dem genannten Heizprogramm zugeordnete Energieverbrauch größer als der Soll-Energieverbrauch ist:

❖ eine zweite Iteration, bei der die Solltemperaturen für Abwesenheit und Nacht gemäß dem vordefinierten Schritt geändert werden, der dem Heizprogramm zugeordnete Energieverbrauch, der dem geänderten Temperaturtripel (T1, T2 und T3) entspricht, ermittelt und mit dem Soll-Energieverbrauch verglichen wird, und:

■ wenn der dem genannten Heizprogramm zugeordnete Energieverbrauch kleiner oder gleich dem Soll-Energieverbrauch ist, wird das genannte Heizprogramm als optimales Heizprogramm bestimmt,
■ wenn der dem genannten Heizprogramm zugeordnete Energieverbrauch größer als der Soll-Energieverbrauch ist, wird die erste Iteration erneut durchgeführt.

6. Verfahren nach einem der Ansprüche 1 bis 4, wobei die Bestimmung des optimalen Heizprogramms umfasst:

- eine Bestimmung, anhand der Tabelle, des Energieverbrauchs, der dem Heizprogramm zugeordnet ist, das den vom Nutzer festgelegten Komfort-, Abwesenheits- und Nacht-Solltemperaturen entspricht,
- iterativ:

∗ eine Änderung der Komfort-, Abwesenheits- und Nacht-Solltemperaturen gemäß dem vordefinierten Schritt,
* eine Bestimmung des Energieverbrauchs, der dem entsprechenden Heizprogramm zugeordnet ist, anhand der Tabelle,
∗ einen Vergleich des dem entsprechenden Heizprogramm zugeordneten Energieverbrauchs mit dem Ziel-Energieverbrauch, und

■ wenn der dem entsprechenden Heizprogramm zugeordnete Energieverbrauch gleich dem Soll-Energieverbrauch ist, wird das entsprechende Heizprogramm als optimales Heizprogramm bestimmt, oder
■ wenn zwischen zwei Iterationen der dem entsprechenden Heizprogramm zugeordnete Energieverbrauch den Ziel-Energieverbrauch überschritten hat, gilt:

o die Komfort-, Abwesenheits- und Nachttemperaturen werden der Reihe nach iterativ gemäß dem vordefinierten Schritt geändert, bis der dem entsprechenden Heizprogramm zugeordnete Energieverbrauch gleich dem Ziel-Energieverbrauch ist, wobei das entsprechende Heizprogramm das optimale Heizprogramm ist, oder wenn keiner der den Heizprogrammen zugeordneten Energieverbräuche gleich dem Ziel-Energieverbrauch ist, Auswahl des Heizprogramms, dessen zugeordneter Energieverbrauch den Ziel-Energieverbrauch um einen Grenzwert übersteigt, und/oder vorzugsweise Auswahl des ersten Heizprogramms, bei dem der zugeordnete Energieverbrauch geringer ist als der Ziel-Energieverbrauch, wobei das entsprechende Heizprogramm das optimale Heizprogramm ist.

7. Verfahren nach einem der Ansprüche 1 bis 4, wobei die Bestimmung des optimalen Heizprogramms umfasst:

- eine Bestimmung, anhand der Tabelle, des Energieverbrauchs, der dem Heizprogramm zugeordnet ist, das den vom Benutzer festgelegten Komfort-, Abwesenheits- und Nacht-Solltemperaturen entspricht,
- dann iterativ:

\* Änderung der Abwesenheits-Solltemperatur (T3) gemäß dem vordefinierten Schritt bis die Abwesenheits-Solltemperatur (T3) um eine erste vordefinierte Abweichung unter der Komfort-Solltemperatur (T1) liegt, und bei jeder Iteration Bestimmung des Energieverbrauchs, der dem Heizprogramm zugeordnet ist, welches der geänderten Abwesenheits-Solltemperatur (T3) entspricht, und, wenn der Energieverbrauch des Sollwerts (Cc) nicht erreicht wird:

■ Änderung der Nacht-Solltemperatur (T2) gemäß dem vordefinierten Schritt, bis die Nacht-Solltemperatur (T2) gemäß einer zweiten vordefinierten Abweichung unter der Komfort-Solltemperatur (T1) liegt, und Bestimmung, bei jeder Iteration, des Energieverbrauchs, der dem Heizprogramm zugeordnet ist, welches der geänderten Nacht-Solltemperatur (T2) entspricht, und, wenn der Soll-Energieverbrauch (Cc) nicht erreicht wird:

o Änderung der Komfort-Solltemperatur gemäß dem vordefinierten Schritt und Bestimmung des dem entsprechenden Heizprogramm zugeordneten Energieverbrauchs, und, wenn der Soll-Energieverbrauch (Cc) nicht erreicht wird, erneute Änderung der Abwesenheits-Solltemperatur (T3), bis der dem entsprechenden Heizprogramm zugeordnete Energieverbrauch gleich dem Soll-Energieverbrauch (Cc) ist, oder wenn keiner der den Heizprogrammen zugeordneten Energieverbräuche gleich dem Ziel-Energieverbrauch ist, Auswahl des Heizprogramms, dessen zugeordneter Energieverbrauch den Soll-Energieverbrauch (Cc) um einen Grenzwert übersteigt, und/oder vorzugsweise Auswahl des ersten Heizprogramms, bei dem der zugeordnete Energieverbrauch kleiner als der Ziel-Energieverbrauch ist, wobei das entsprechende Heizprogramm das optimale Heizprogramm ist.

8. Verfahren nach einem der Ansprüche 6 oder 7, wobei der Grenzwert:

   - bei 5% des Ziel-Energieverbrauchs (Cc), oder
   - zwischen 2 und 15kWh, vorzugsweise 10kWh liegt.

9. Verfahren nach einem der Ansprüche 4 bis 7, wobei die Bestimmung des optimalen Heizprogramms zunächst umfasst:

   - Bestimmen, ob der Soll-Energieverbrauch (Cc) kleiner ist als der in der Tabelle enthaltene minimale Energieverbrauch, und, wenn ja,

     ∗ Senden einer Meldung, dass der Soll-Energieverbrauch (Cc) zu niedrig ist, und Stoppen des Verfahrens, andernfalls
     \* Bestimmen des optimalen Heizprogramms.

10. Verfahren nach einem der Ansprüche 4 bis 8, wobei die Bestimmung des optimalen Heizprogramms ferner umfasst:

    - Bestimmen bei jeder Iteration, ob alle Komfort-, Abwesenheits- und Nacht-Solltemperaturen unter oder über den Grenzwerten des Temperaturintervalls liegen, und wenn dies der Fall ist, wird das den Solltemperaturen der aktuellen Iteration zugeordnete Heizprogramm als das optimale Heizprogramm bestimmt.

11. Verfahren nach einem der Ansprüche 1 bis 10, wobei nur ein Teil der Heizprogramme erstellt wird, wobei die diesen Heizprogrammen zugeordneten Energieverbräuche mit Hilfe einer Funktion berechnet werden, wobei die anderen Heizprogramme und ihre zugehörigen Energieverbräuche durch multilineares Interpolieren der von der Funktion berechneten Energieverbräuche erhalten werden.

12. Verfahren nach einem der vorhergehenden Ansprüche, wobei der vordefinierte Schritt zwischen 0,5 und 2 Grad liegt.

13. Computersystem zur Steuerung eines thermischen Systems eines Gebäudes über einen Zeitraum, umfassend eine Computerverarbeitungsschaltung zur Durchführung des Verfahrens nach einem der Ansprüche 1 bis 12.

14. Computersystem nach Anspruch 13, welches ferner einen Server und/oder ein mobiles Gerät umfasst.

15. Computerprogramm, umfassend Anweisungen zur Durchführung des Verfahrens nach einem der Ansprüche 1 bis 12, wenn dieses Programm von einem Prozessor ausgeführt wird.

**Claims**

1. Method, implemented by computer-based means, for controlling a heating system of a building, over a period of time, comprising, following a definition of at least one time interval and of at least a first setpoint temperature to be reached during said time interval:

   - building a plurality of programs, referred to as heating programs, such that, for each heating program, an arbitrary temperature within a temperature range that includes the first setpoint temperature is associated with the time interval, said arbitrary temperatures associated with each heating program being different for each heating program,
   - creating a table in which each heating program is associated with a power consumption related to the power needed to reach the value of the arbitrary temperature associated with said heating program,
   - determining an optimal heating program, such that said optimal heating program complies with a user command,
   - sending the optimal heating program to be applied to the input of the heating system

   **characterised in that**:

   - the following are defined:

     -- three time intervals, corresponding to a comfort period, an absence period and a night period,
     -- a temperature triplet (T1, T2 and T3) comprising a comfort setpoint temperature (T1), an absence setpoint temperature (T3) and a night setpoint temperature (T2), these temperatures being respectively associated with said periods, and
     - three arbitrary temperatures, within a temperature range that includes the three comfort, absence and night setpoint temperatures, the temperature triplet (T1, T2 and T3) is associated with each heating program, such that each heating program is unique, that an arbitrary temperature is associated with each of the three time intervals, and that the difference between two arbitrary temperatures is equal to a predefined step,
     - the table comprising said heating programs, each heating program being associated with a power consumption related to the power needed to reach each of the three arbitrary temperatures associated with each of the three time intervals.

2. Method according to claim 1, wherein the user command is a second setpoint temperature to be reached, which is different from the first setpoint temperature, the determination of the optimal heating program comprising extracting the heating program corresponding to the second setpoint temperature from the table.

3. Method according to one of claims 1 or 2, wherein the user command is a setpoint power consumption.

4. Method according to claim 3, wherein the determination of the optimal heating program comprises:

   - determining, using the table, the power consumption associated with the heating program corresponding to the first setpoint temperature, then
   - iteratively, the first setpoint temperature is modified by a predefined step such that:

     -- upon each iteration, the power consumption associated with the heating program corresponding to the first modified setpoint temperature is determined and compared to the setpoint power consumption, until a condition is met such that the power consumption associated with the first modified setpoint temperature is lower than or equal to the setpoint power consumption
     - then, the heating program associated with said power consumption meeting said condition is extracted from the table and defined as the optimal heating program.

5. Method according to one of claims 1 to 4, wherein the determination of the optimal heating program comprises:

   - determining, using the table, the power consumption associated with the heating program corresponding to the comfort, absence and night setpoint temperatures defined by the user, then
   - the method comprises

     -- a first iteration wherein a value of the comfort setpoint temperature (T1) is modified by the predefined step, the power consumption associated with the heating program corresponding to the modified temperature triplet (T1, T2 and T3) is determined and compared with the setpoint power consumption, and:

--- if the power consumption associated with said heating program is lower than or equal to the setpoint power consumption, said heating program is determined to be the optimal heating program;
--- if the power consumption associated with said heating program is higher than the setpoint power consumption:

---- a second iteration wherein the absence and night setpoint temperatures are modified by said predefined step, the power consumption associated with the heating program corresponding to the modified temperature triplet (T1, T2 and T3) is determined and compared with the setpoint power consumption, and:

- -- if the power consumption associated with said heating program is lower than or equal to the setpoint power consumption, said heating program is determined to be the optimal heating program,
- -- if the power consumption associated with said heating program is higher than the setpoint power consumption, the first iteration is repeated.

6. Method according to one of claims 1 to 4, wherein the determination of the optimal heating program comprises:

- determining, using the table, the power consumption associated with the heating program corresponding to the comfort, absence and night setpoint temperatures defined by the user,
- iteratively:

-- modifying the comfort, absence and night setpoint temperatures by the predefined step,
- determining, using the table, the power consumption associated with the corresponding heating program,
-- comparing said power consumption associated with said corresponding heating program and said target power consumption, and
--- if the power consumption associated with said corresponding heating program is equal to the setpoint power consumption, said corresponding heating program is determined to be the optimal heating program, or
--- if, between two iterations, the power consumption associated with said corresponding heating program has exceeded the target power consumption:

---- the comfort, absence and night temperatures are modified in turn, iteratively, by the predefined step, until the power consumption associated with the corresponding heating program is equal to the target power consumption, said corresponding heating program being the optimal heating program, or when none of the power consumptions associated with the heating programs are equal to the target power consumption, selecting the heating program whose associated power consumption exceeds the target power consumption by a limit value, and/or preferably selecting the first heating program for which the associated power consumption is lower than the target power consumption, the corresponding heating program being the optimal heating program.

7. Method according to one of claims 1 to 4, wherein the determination of the optimal heating program comprises:

- determining, using the table, the power consumption associated with the heating program corresponding to the comfort, absence and night setpoint temperatures defined by the user,
- then, iteratively:

-- modifying the absence setpoint temperature (T3) by the predefined step until the absence setpoint temperature (T3) is lower than the comfort setpoint temperature (T1) by a first predefined deviation, and upon each iteration, determining the power consumption associated with the heating program corresponding to the modified absence setpoint temperature (T3), and, if the setpoint power consumption (Cc) is not reached:
-- modifying the night setpoint temperature (T2) by the predefined step until the night setpoint temperature (T2) is lower than the comfort setpoint temperature (T1) by a second predefined deviation, and determining, upon each iteration, the power consumption associated with the heating program corresponding to the modified night setpoint temperature (T2), and, if the setpoint power consumption (Cc) is not reached:

---- modifying the comfort setpoint temperature by the predefined step and determining the power consumption associated with the corresponding heating program, and, if the setpoint power consumption (Cc) is not reached, modifying the absence setpoint temperature (T3) again,

until the power consumption associated with the corresponding heating program is equal to the setpoint power consumption (Cc), or when none of the power consumptions associated with the heating programs are equal to the target power consumption, selecting the heating program whose associated power consumption exceeds the setpoint power consumption (Cc) by a limit value, and/or preferably selecting the first heating program for which the associated power consumption is lower than the target power consumption, the corresponding heating program being the optimal heating program.

8. Method according to one of claims 6 or 7, wherein the limit value is:

- 5% of the setpoint power consumption (Cc), or
- between 2 and 15 kWh, preferably 10 kWh.

9. Method according to one of claims 4 to 7, wherein the determination of the optimal heating program comprises previously:

- determining whether the setpoint power consumption (Cc) is lower than the minimum power consumption included in the table and, if so,

-- sending a message conveying that the setpoint power consumption (Cc) is too low, and stopping the process, or if not
-- determining the optimal heating program.

10. Method according to one of claims 4 to 8, wherein the determination of the optimal heating program further comprises:

- determining, upon each iteration, whether all of the comfort, absence and night setpoint temperatures are lower than or higher than the bounds of the temperature range and, if so, the heating program associated with the setpoint temperatures of the current iteration is determined to be the optimal heating program.

11. Method according to one of claims 1 to 10, wherein only some of the heating programs are built, the power consumptions associated with these heating programs being calculated by means of a function the other heating programs and their associated power consumptions being obtained by multilinear interpolation of the power consumptions calculated by said function.

12. Method according to one of the preceding claims, wherein the predefined step is between 0.5 and 2 degrees.

13. Computer system for controlling a heating system of a building over a period of time including a computer processing circuit for implementing the method according to one of claims 1 to 12.

14. Computer system according to claim 13, further comprising a server and/or a mobile device.

15. Computer program including instructions for implementing the method according to one of claims 1 to 12, when this program is executed by a processor.

[Fig. 1]

FIG. 1

[Fig. 2]

FIG. 2

[Fig. 3]

[Fig. 4]

EP 3 812 852 B1

Conso consigne Cc, triplet de températures {T1, T2, T3} — S21

non ← Cc < min {C$_i$(T$_i$)} — S23

matrice (((T$_{ij}$)) au pas p — S22

oui

Cr = conso ((T$_i$), i =1...3) — S24

**FIG. 3**

S = sign (Cc-Cr) — S25

{T$_{i+1}$} = {T$_i$+p} — S26

Cr$_{i+1}$ = conso ((T$_{i+1}$)), i =1...3 — S27

S211

non ← sign (Cc-C$_{i+1}$) = S — S28

oui

S29

matrice restreinte = matrice limitée aux triplets de consigne compris entre {T$_i$} et {T$_{i+1}$}

{Ti} = {T$_{i+1}$}
{T$_{i+1}$} = {T$_i$+p}

delta = Cc-C[{T$_i$}, {T$_{i+1}$}] — S212

A faire dans la matrice restreinte

C$_{i+1}$ = conso ((T$_{i+1}$))

selection des éléments pour lesquels delta > 0 — S213

S210

Retour du triplet minimant delta — S214

Nouveau triplet à appliquer: To1, To2, To3 — S215

FIG. 4

[Fig. 5]

FIG. 5

- S51 — T1, T2, T3
- S52 — N triplets de températures quelconques
- S53 — Création de N programmes de chauffe
- S54 — Calcul des N consommations associées aux N programmes de chauffe
- S55 — Interpolations multi-linéaires de la première matrice
- matrice réduite
- matrice
- S56 — Recherche du programme de chauffe optimal
- consommation de consigne Cc
- Triplet de températures optimal To1, To2, To3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019134629 A
- US 2015253027 A